# EUROPÄISCHE PATENTANMELDUNG

(11) **EP 2 128 649 A1**
(43) Veröffentlichungstag der Anmeldung: **02.12.2009**
(21) Anmeldenummer: 08104130.3
(22) Anmeldetag: 28.05.2008
(51) Int. Cl.: G01S 13/88, G01S 13/89

(54) **Radar-Messvorrichtung mit einer planaren Antennenanordnung**

(71) Anmelder: Leica Geosystems AG, 9435 Heerbrugg (CH)
(72) Erfinder: Leich, Martin, CH-9404, Rorschacherberg (CH); Aeschbacher, Michael, CH-8500, Frauenfeld (CH); Ruedisser, Andreas, A-6900 Bregenz (AT)
(74) Vertreter: Kaminski Harmann

(57) **Zusammenfassung**

Die Erfindung betrifft eine Radar-Messvorrichtung zur Ortung eines in einem zu untersuchenden Medium eingeschlossenen Objekts mittels elektromagnetischer hochfrequenter Signalimpulse. Dafür sind eine Auswerteeinheit mit einem Rechenmittel, eine Antennenanordnung (1) in einer ersten Ebene aus mehreren planaren Antennen (17,18) wobei die Antennen (17,18) zum Empfang und/oder zur Aussendung der Signalimpulse ausgebildet sind, sowie Sendeschaltungen (14) zur Erzeugung der auszusendenden Signalimpulse und Empfangsschaltungen (15) zur Detektion von am Objekt reflektierten Teilen der Signalimpulse vorgesehen.

Die Antennenanordnung (1) weist erfindungsgemäss dabei mindestens eine erste und eine zweite Antennenuntergruppe (2,3) auf, wobei innerhalb der ersten und der zweiten Antennenuntergruppen (2,3) die Antennen (17,18) jeweils linear nebeneinander angeordnet sind, und mindestens ein Teil der Antennen (17,18) der ersten und der zweiten Antennenuntergruppe (2,3) sich jeweils in Richtung ihres - durch die Abstrahlcharakteristik gegebenen - Fernfeldminimums gegenüberliegend angeordnet sind.

## Beschreibung

Die Erfindung betrifft eine Radar-Messvorrichtung zur Ortung eines in einem zu untersuchenden Medium eingeschlossenen Objekts nach dem Oberbegriff des Anspruchs 1 und ein ebensolches Messverfahren nach dem Oberbegriff des Anspruchs 13.

Insbesondere im Baugewerbe spielt die Detektion und Ortung von in einem Medium eingeschlossenen Objekten - insbesondere in Wänden eingebetteter länglicher Objekte - eine wesentliche Rolle, sei es zur Detektion von Armierungseisen, Metallrohren, elektrischen Leitungen oder Kunststoffrohren. Zum Beispiel ist die Kenntnis des Vorhandenseins, der Art und der relativen Lage von im Mauerwerk eingebetteten elektrischen Leitungen beim Bearbeiten desselben durch ein Handwerkzeuggerät wichtig um einerseits die Leitungen nicht zu beschädigen und andererseits zweckentsprechende Bearbeitungsvorgänge ausführen zu können - zum Beispiel das Erstellen von Dübellöchern mit einem Mindestabstand zu Leitungen oder Armierungseisen.

So werden eingebettete längliche Objekte beispielsweise nach der US 6541965 über die Änderung der Impedanz eines eingeprägten, magnetischen Nahfeldes, nach der DE 10239431 über die Änderung der Impedanz eines eingeprägten, elektrischen Nahfeldes oder nach der US 5541605 elektromagnetisch über Radar detektiert und charakterisiert. Da die beiden letztgenannten Messprinzipien physikalisch insbesondere auf die Änderung der Dielektrizitätskonstanten ansprechen, stellt die Detektion von Kunststoffrohrleitungen im Mauerwerk, welche im Frequenzbereich von etwa 1 - 10 GHz eine relative Dielektrizitätskonstante von ca. 4 bis 8 - z.B. von ca. 4.3 - aufweist, eine messtechnische Herausforderung dar. Zusätzlich erschwert wird deren Detektion durch die zur Wärmeisolation in Ziegelsteinen eingebrachten Hohlräume im Mauerwerk, da deren Dimension und Lage denen von Kunststoffrohrleitungen ähnlich ist.

Gattungsgemässe Radarsignal-Messgeräte besitzen beispielsweise Antennen zur Abstrahlung von hochfrequenten Radarsignalen im Frequenzbereich von z.B. 0.5 - 10 GHz.

Zur Aussendung und zum Empfang sehr breitbandiger elektromagnetischer Radarsignal-Impulse werden dabei meist Antennen verwendet, die einen geringen Schlankheitsgrad, d.h. eine flächenartige Ausdehnung, aufweisen. Antennen mit flächenhafter Ausdehnung lassen sich unter verhältnismässig geringem Aufwand herstellen und zu Arrays konfigurieren.

Zum Beispiel DE 102005062874 offenbart eine Breitbandantennenanordnung, welche aus mehreren dreieckig zugeschnittenen Leitersegmenten besteht, die eine stumpfwinklige Pyramide bilden. Jeweils zwei einander gegenüberliegende Leitersegmente bilden dabei einen flächenhaften Dipol, so dass die aus der pyramidenartigen Anordnung hervorgehende beide Dipole orthogonal zueinander polarisiert sind. Dies gewährleistet zwar trotz räumlicher Nähe bei Verwendung der Dipole als Sende- und Empfangsantenne eine relativ gute Entkopplung zwischen Sender und Empfänger bzw. ein relativ schwaches direkt übersprechendes Signal, stellt aber bei der Detektion länglicher Objekte mittels deren Rückstreuung eine suboptimale Lösung dar.

Die in US 7333045 dargestellte Lösung besteht aus drei jeweils zueinander um 120 Grad verdrehten Patchantennen, die in einer Ebene um einen zentralen Punkt angeordnet sind. Eine hinreichende Entkopplung der Antennen soll durch schlitzartige Einschnitte im Trägermaterial gewährleistet werden. Allerdings stehen die Antennen nicht orthogonal zueinander und weisen deshalb schon eine stärkere gegenseitige Kopplung auf.

Die beiden in der DE 102005062874 und der US 7333045 vorgeschlagenen Lösungen erfordern zudem breitbandige Zuleitungen für die abzustrahlenden bzw. zu empfangenen Signale. Diese aber stellen in ihrer im Allgemeinen asymmetrischen Struktur eine günstige Voraussetzung zur Ausbreitung von Mantelwellen dar, welche nur schwer zu unterdrücken sind und die Abstrahlungscharakteristik der Antenne beeinträchtigen.

Des Weiteren ist aus der DE 10104863 A1 eine Antenne zur Aussendung von hochfrequenten Radarsignalen bekannt. Die Antenne der DE 10104863 A1 ist eine einteilige, planare Antenne, die mit hoher mechanischer Stabilität auf einer Leiterplatte fixiert ist und ein relativ symmetrisches Richtdiagramm mit weitgehend reduzierten Nebenmaxima bzw. Nebenkeulen besitzt. Die bekannte Antenne besteht aus einer elektrisch leitenden Platte, welche an einander gegenüber liegenden Rändern zwei abgewinkelte Seitenabschnitte aufweist, die als Leitungsarme zur Ankopplung der Antenne an ein Speisennetzwerk dienen.

Die US 5296807 offenbart einen handhabbaren Detektor für eingebettete längliche Objekte mit einem handhabbaren, über eine Fläche verfahrbaren Messkopf für ein eingeprägtes magnetisches Nahfeld, einem Wegdetektor sowie mit einer örtlich separaten bildausgebenden Auswerteeinheit, die mit dem Messkopf signalübertragend verbunden ist.

Nach der US 5051748 weist ein transportabler untergrundergründender Radardetektor im Mikrowellenbereich zur Detektion von Armierungseisen in Beton ein Antennenarray mit entlang einer Richtung beabstandeten Wellenleitern auf, deren zugeordnete Lochantennen direkt ein zeilenweises Abbild erzeugen, welches in Verbindung mit einer Bewegung des Antennenarrays quer zur Richtung des Arrays und eines Computers ein flächiges Abbild des eingebetteten Objektes erzeugt, das über ein Bildausgabegerät dargestellt wird.

Nach der US 5900833 kann ein tragbarer Radardetektor mit synthetischem Aperturradar (SAR), dessen Signale jeweils in Signalprozessoren verarbeitet werden, ein dreidimensionales Abbild von im Untergrund eingebetteten Objekten wie armiertem Beton liefern, welches über ein Bildausgabegerät dargestellt wird. Die einzelnen, nicht notwendig in Reihe angeordneten, voneinander beabstandeten Antennen werden zur Erzeugung einer synthetischen Apertur mit dem Radardetektor quer zur Reihe der Antennen bewegt.

Nach der US 5835054 weist ein Radardetektor zur Ergründung von im Untergrund eingebetteten Objekten mehrere, in einem linearen Antennenarray angeordnete Antennen für elektromagnetische Wellen im Hochfrequenzbereich mit zumindest einer Sende/Empfangseinheit, einem Signalprozessor zur zeitlichen Korrelation und SAR-Auswertung der Signale sowie einer Anzeigeeinheit auf. Nachteilig bei dieser Lösung ist die Notwendigkeit eines Scannens mit nachfolgendem Berechnen der Positionsdaten über der Zeit.

Zudem sind nach der US 6600441 bei einem Radardetektor für eingebettete längliche Objekte mehrere, definiert voneinander beabstandete Antennenpaare vorhanden, aus deren einzelnen Radarmesssignalen der Signalprozessor über Korrelationsfunktionen längliche Objekte selektiert und deren Lage in der Ebene ermittelt.

Weiter ist aus der WO 02063334 ein Radar-Detektor mit einer Patch-Antenne bekannt.

Ebenso sind dem Fachmann die gattungsgemässen Methoden der rechnergestützten Signalverarbeitung insbesondere von zeitbasierten 3-d-Messdaten bekannt, die als solche selbst nicht Gegenstand der Erfindung sind.

Eine Aufgabe der Erfindung ist daher das Bereitstellen einer verbesserten Radar-Messvorrichtung zur Ortung eines in einem zu untersuchenden Medium eingeschlossenen Objekts sowie eines verbesserten Radar-Messverfahrens für eine solche Radar-Messvorrichtung.

Insbesondere soll dabei eine verbesserte Entkopplung der Sende- und Empfangsantennen ermöglicht werden.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die erfindungsgemässe Radar-Messvorrichtung ist ausgebildet zur Ortung eines in einem zu untersuchenden Medium eingeschlossenen - insbesondere länglichen - Objekts mittels breitbandiger elektromagnetischer hochfrequenter Radar-Signalimpulse im Bereich zwischen 0,5 und 10 GHz.

Dazu weist die Messvorrichtung eine - einerseits zum möglichst direkten Anlegen an das Medium vorgesehene - Antennenanordnung in einer ersten Ebene aus mehreren planaren, dipolartigen Antennen mit jeweils einem ersten und einem zweiten Dipol-Arm auf, wobei die Antennen zum Empfang und/oder zur Aussendung der Signalimpulse mit durch die Anordnungsrichtung der Dipol-Arme definierter Polarisationsrichtung ausgebildet sind. Zur Erzeugung der auszusendenden Signalimpulse bzw. zur Detektion von Teilen von reflektierten Signalimpulsen sind Sende- und Empfangsschaltungen, die mit den Antennen verbunden oder jeweils auf den Antennen entsprechend aufgebracht sind, vorhanden.

Erfindungsgemäss sind dabei die Polarisationsrichtungen sämtlicher Antennen der Antennenanordnung jeweils im Wesentlichen parallel zueinander ausgerichtet, sodass durch die Messvorrichtung insbesondere die Detektion und Ortung von längs der Polarisationsrichtung verlaufenden Leitungen vorgesehen ist.

Zur Abstrahlungsoptimierung der Antennenanordnung weist diese dabei mindestens eine erste und eine zweite Antennenuntergruppe - bzw. einen ersten und einen zweiten Antennenarray - auf, wobei die einzelnen Antennen innerhalb der Antennenuntergruppen linear nebeneinander im Wesentlichen senkrecht zur Polarisationsrichtung versetzt angeordnet sind. Dabei sind Antennen der ersten Antennenuntergruppe derart im Wesentlichen in Polarisationsrichtung jeweils gegenüber Antennen der zweiten Antennenuntergruppe angeordnet, sodass sich gegenüberliegende Antennen jeweils in deren Fernfeldminima bezüglich der Abstrahlcharakteristik positioniert sind.

Des Weiteren weist die Radar-Messvorrichtung eine Auswerteeinheit mit einem Rechenmittel zum Auswerten der gesendeten und empfangenen Radar-Signalimpulse und zum Ableiten von Positionsinformation - insbesondere inklusive Tiefeninformation - von detektierten Leitungen sowie ein Ausgabemittel für die berechneten Radar-Messergebnisse auf.

Das Messgerät mit der erfindungsgemässen Antennenanordnung ist besonders vielseitig einsetzbar, da diese keine Beschränkung auf magnetische Materialien oder das Vorhandensein einer Netzspannung erfordern, sondern jede Veränderung in der Dielektrizitätskonstanten des zu untersuchenden Materials registrieren, sodass das Messgerät auch auf beispielsweise Kunststoffrohre, Lufteinschlüsse bzw. Hohlräume anspricht.

Dadurch, dass die den jeweiligen Antennen der ersten Antennenuntergruppe jeweils nächstliegende Antenne aus der zweiten Untergruppe in deren Abstrahlungsminimum positioniert und in derselben Richtung polarisiert ist, kann eine hinreichende Entkopplung zwischen den einzelnen Antennen der beiden Untergruppen erreicht werden. Zusätzlich kann auf der dem zu untersuchenden Medium abgewandten Seite der planaren Antennenanordnung hochfrequenzabsorbierendes Material angeordnet werden, um noch bestehendes durch das elektrische Nahfeld bedingtes Übersprechen zu reduzieren.

Geeignete hochfrequenzabsorbierende Materialien, die in einer Schicht von der Antennenanordnung beabstandet angeordnet werden können, sind dem Fachmann bekannt. Beispielsweise eignen sich dafür Gummi-Absorber oder Polyurethan-Schaumstoff-Absorber, die z.B. eine Imprägnierung mit einer Kohlenstoff Dispersion aufweisen. Die Schicht hochfrequenzabsorbierendes Material - die beispielsweise 2 bis 30 mm dick gewählt werden kann - wird insbesondere in Ebene, die parallel zur AntennenanordnungsEbene ausgerichtet ist, angeordnet. Dabei kann die hochfrequenzabsorbierende Materialschicht durch eine Zone freien Raumes von der Antennenanordnung getrennt sein, insbesondere wobei die hochfrequenzabsorbierende Materialschicht etwa 1 - 5 mm von der Antennenanordnung beabstandet ist.

Durch das hochfrequenzabsorbierende Material kann ein durch das elektrische Nahfeld bedingtes Signal-Übersprechen von sich jeweils gegenüberliegenden Antennen der ersten und zweiten Antennenuntergruppe reduziert und Eigenresonanzen der einzelnen Antennen bedämpft werden. Des Weiteren können durch das absorbierende Material auch irreführende Reflexionen leitfähiger Strukturen und Komponenten, die im Gehäuse des Radar-Messgeräts auf der vom Antennen-Array abgewandten Seite der Absorberschicht angeordnet sind, unterdrückt werden.

In einer bevorzugten Ausführung der Radar-Messvorrichtung sind die linear nebeneinander angeordneten Antennen der ersten Antennenuntergruppe zur Aussendung der Signalimpulse und die die linear nebeneinander angeordneten Antennen der zweiten Antennenuntergruppe zum Empfang der Signalimpulse ausgebildet. Insbesondere weisen dafür die Sende-Antennen der ersten Untergruppe jeweils gleichartige Sendeschaltungen zur Erzeugung der auszusendenden Signalimpulse und die Empfangs-Antennen jeweils gleichartige Empfangsschaltungen zur Detektion von Teilen von reflektierten Signalimpulsen auf, sodass jeder einzelnen Antenne jeweils separat eine Sende- bzw. Empfangsschaltung zugeordnet ist.

Beispielsweise wird die erste Antennenuntergruppe bzw. das erste Antennen-Array durch mindestens drei linear in gleichem Abstand nebeneinander angeordnete Antennen - die jeweils mit einer Sendeschaltung verbunden sind - gebildet.

Diesem ersten Array gegenüberliegend ist die zweite Antennenuntergruppe bzw. das zweite Antennen-Array mit mindestens drei jeweils den Antennen des ersten Arrays in Polarisationsrichtung gegenüberliegenden Antennen angeordnet, wobei auf den Antennen des zweiten Arrays jeweils eine Empfangsschaltung aufgebracht ist.

Insbesondere können der erste zum Senden vorgesehene und der zweite zum Empfang vorgesehene Array dieselbe Anzahl an linear nebeneinander angeordneten Antennen aufweisen, die sich jeweils paarweise gegenüberliegen. Alternativ kann jedoch auch eine unterschiedliche Anzahl an Empfangs- und Sendeantennen vorhanden sein. Rein beispielhaft kann die Antennenanordnung drei Sendeantennen und fünf Empfangsantennen aufweisen, wobei dann z.B. drei der fünf Empfangsantennen der Empfangsuntergruppe den jeweiligen Sendeantennen in deren Polarisationsrichtung gegenüberliegend angeordnet sind.

Die einzelnen planaren Antennen der Antennenanordnung können im Speziellen dabei eine asymmetrische dipolartige Geometrie aufweisen. So ist beispielsweise der erste Dipol-Arm der einzelnen Antennen kreisförmig und der zweite Dipol-Arm rechteckig ausgebildet, wobei die Dipol-Arme vorzugsweise als leitende Platten ausgebildet sind. In dieser Ausführung der Antennen können insbesondere die Sende- bzw. Empfangsschaltungen jeweils direkt auf einer der beiden die Dipol-Arme bildenden leitenden Platten aufgebracht sein.

Des Weiteren kann beispielsweise durch die Verwendung grössenreduzierter Antennen eine weitere Reduktion des durch das elektrische Nahfeld bedingten Übersprechens erreicht werden - beispielsweise durch die Faltung einer der beiden Dipol-Arme und/oder Einbettung oder Aufbringung auf hochpermittivem Material (z.B. techn. Keramik wie Titandioxid) von einzelnen oder sämtlichen Antennen der Antennenanordnung.

Im Allgemeinen können die die Antennen der Antennenanordnung bildenden leitenden Platten - wie nach dem Stand der Technik hinlänglich bekannt - auch auf einer oder mehreren Leiterplatten bzw. Platinen - auch Printed Circuit Boards (PC-Board) genannt - aufgebracht sein.

In einer speziellen Ausführungsform können die zum Empfang vorgesehenen Antennen auch als elektrisch geschirmte Antennen, insbesondere in Form einer im Frequenzbereich der Signalimpulse nicht resonanten Leiterschleife am Eingang eines Vorverstärkers, ausgebildet sein.

Vorzugsweise ist die erfindungsgemässe Radar-Messvorrichtung als handhaltbares, kompaktes Gerät ausgebildet, wobei durch das Vorhandensein von mehreren Sende- und Empfangsantennen, die in bestimmtem Abstand mit gleicher Polarisationsrichtung definiert zueinander angeordnet sind, direkt ein Abbild eines Querschnittes des zu untersuchenden Mediums - wobei die Schnittebene senkrecht zur Antennenanordnungsebene und in Richtung der Erstreckung der beiden Antennen-Arrays gegeben ist - mit Tiefeninformation z.B. für dabei detektierte Leitungen erzeugbar ist. Ein Überfahren einer abzuscannenden Wandfläche bzw. einer Fläche des zu untersuchenden Mediums ist dabei zur Erzeugung des Querschnitt-Abbildes nicht zwingend erforderlich, kann jedoch zur Erzeugung eines räumlichen Abbildes des zu untersuchenden Mediums in einer speziellen Anwendung vorgesehen sein.

Zur Generierung eines Messergebnisses bzw. Abbildes des zu untersuchenden Mediums durch die Auswerteeinheit aus den empfangenen zurückgestreuten Signalimpulsen können dabei sämtliche dem Fachmann bekannte Methoden der rechnergestützten Signalverarbeitung verwendet werden. Beispielsweise kann dafür das so genannte Rückprojektions-Verfahren (back projection) angewendet werden. Beispielhaft ist dieses Verfahren beschrieben in "Ultra-wideband Synthetic Aperture Imaging, Data and image processing", Greg Barrie, Defence R&D Canada - Ottawa TECHNICAL MEMORANDUM, DRDC Ottawa TM 2003-015, Januar 2003.

Dabei wird der Ort eines in einem Medium eingeschlossenen Objekts in Relation zur Position der Antennen aus dem zeitlichen Verlauf der empfangenen Signale rekonstruiert. Da die Richtung der am eingebetteten Objekt reflektierten Signale der ausgesendeten Signal-Impulse mit einer einzigen Empfangsantenne im Allgemeinen nicht bestimmt werden kann, werden in einer Bildebene für jeweils eine Sende-Empfangsantennenpaarung alle Punkte mit der entsprechenden momentanen Empfangssignalstärke bewertet, in denen das reflektierende Objekt positioniert sein könnte. Alle diese Punkte liegen daher auf einer Ellipse, deren beide Brennpunkte mit den Positionen der Sende- bzw. Empfangsantenne identisch sind. Die Signale aus mehreren Sende-Empfangsantennenkombinationen erzeugen in der Bildebene somit mehrere elliptisch geformte Bewertungsprofile, wobei sich alle elliptischen Verläufe in demjenigen Punkt schneiden, der dem tatsächlichen Ort des die Reflexionssignale verursachenden Objektes entspricht, Daher kann der Ort des Objektes im Maximum der Summe aller Bewertungsprofile gefunden werden. Dieses Verfahren wird insbesondere dann angewendet, wenn - wie bei der Suche von Leitungen in Wänden - die Zahl und Struktur der zu findenden eingeschlossenen Objekte verhältnismässig gering ist. Im Rahmen dieses Verfahrens ist dabei die Kenntnis der relativen Permittivität des einbettenden Mediums vorteilhaft, um eine hinreichend exakte Ausbreitungsgeschwindigkeit der Impulse im Medium berechnen zu können.

Des Weiteren betrifft die Erfindung ein Radar-Messverfahren für die Messvorrichtung. Im Rahmen des Verfahrens werden die breitbandigen hochfrequenten Messsignale abwechselnd und sequenziell nacheinander durch jeweils eine der Antennen des ersten Antennenarrays ausgesendet, insbesondere sodass die Antennen nacheinander mit vorgegebener Aussendungs-Rate jeweils Messsignalimpulse in das zu untersuchende Medium aussenden. An im Medium eingeschlossenen Objekten reflektierte Teile der Messsignalimpulse werden durch mindestens eine der Antennen des zweiten Antennenarrays empfangen und ausgewertet. Dabei werden die jeweiligen Laufzeiten der Signalimpulse - von der jeweils aussendenden Antenne des ersten Antennenarrays zu der mindestens einen jeweils empfangenden Antenne des zweiten Antennenarrays - bestimmt. Die einzelnen jeweils bestimmten Laufzeiten für die jeweiligen Messsignale werden zu einem Messergebnis bezüglich der Ortung des Objekts akkumuliert, wobei dieses Ergebnis beispielsweise als Ergebnisabbild graphisch anhand eines Displays dem Benutzer angezeigt werden kann. Beispielsweise wird aus dem Kumulationsmessergebnis der bestimmten Laufzeiten die Position und Einbettungstiefe des im Medium eingeschlossenen Objekts berechnet und angezeigt.

Insbesondere werden Reflektionen der abwechselnd nacheinander durch die Sendeantennen von verschiedenen bekannten Positionen ausgesendeten Messsignale jeweils durch mehrere, und im Speziellen durch sämtliche der Antennen des zweiten Antennenarrays empfangen, sodass für jedes ausgesendete Messsignal mehrere Laufzeiten zu den jeweiligen Empfangsantennen bestimmt werden.

Vorrichtungsseitig können dafür Steuermittel vorhanden sind, sodass mit den zur Aussendung ausgebildeten Antennen abwechselnd jeweils nacheinander mit definiertem zeitlichem Versatz Signalimpulse aussendbar sind.

Alternativ können erfindungsgemäss durch die zur Aussendung ausgebildeten Antennen auch jeweils gleichzeitig die Signalimpulse ausgesendet werden, jedoch reflektierte Teile abwechselnd und sequenziell nacheinander durch jeweils eine der Empfangsantennen registriert werden. Des Weiteren ist auch ein Modus möglich, in welchen die jeweiligen Sende-Antennen mit einem derartigen zeitlichen Versatz einen Signalimpuls aussenden, sodass die Impulse sich gleichzeitig in einem gewünschten vorgegebenen Punkt oder einer gewünschten vorgegebenen Linie des zu untersuchenden Gebiets treffen. Die Reflexe der auf den gewünschten Punkt bzw. die gewünschte Linie fokussierten Sendesignale werden vorzugsweise vermittels der Empfangsantennen registriert, wodurch z.B. ein an einem vermuteten Ort im Medium eingeschlossenes Objekt gezielt geortet werden kann.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: eine erfindungsgemässe Ausführungsform für die Antennenanordnung der Radar-Messvorrichtung;
- Fig.2: die theoretisch angenommene Abstrahlcharakteristik bzgl. des Fernfeldes von einer planaren Dipol-Antenne;
- Fig.3: Teile einer erfindungsgemässen Radar-Messvorrichtung, die an ein zu untersuchendes Medium mit einer darin eingeschlossenen Leitung angelegt ist;
- Fig.4: eine Ausführungsform für eine planare Antenne der Antennenanordnung der Radar-Messvorrichtung, wobei die Schaltkreise der Sende- oder Empfangsschaltung auf einem der beiden Dipol-Arme der Antenne aufgebracht sind;
- Fig.5: eine dreidimensionale Ansicht der Antennenanordnung sowie deren flächenhaften Zuleitungen, dargestellt mit und ohne hochfrequenzabsorbierende Materialschicht;
- Fig.6: eine weitere, gefaltete Ausführungsform für eine dipolartige planare Antenne der Antennenanordnung;
- Fig.7: eine weitere Ausführungsform für eine dipolartige Antenne der Antennenanordnung;
- Fig.8: eine Querschnittsdarstellung der Kombination einer planaren Antenne der ersten Antennenuntergruppe mit einer dieser gegenüberliegenden, elektrisch geschirmten Leiterschleife der zweiten Antennenuntergruppe;
- Fig.9: eine weitere Ausführungsform für die Antennenanordnung mit Schlitzantennen als Antennen; und
- Fig.10: eine zu Figur 3 alternative Ausführungsform für die Radar-Messvorrichtung.

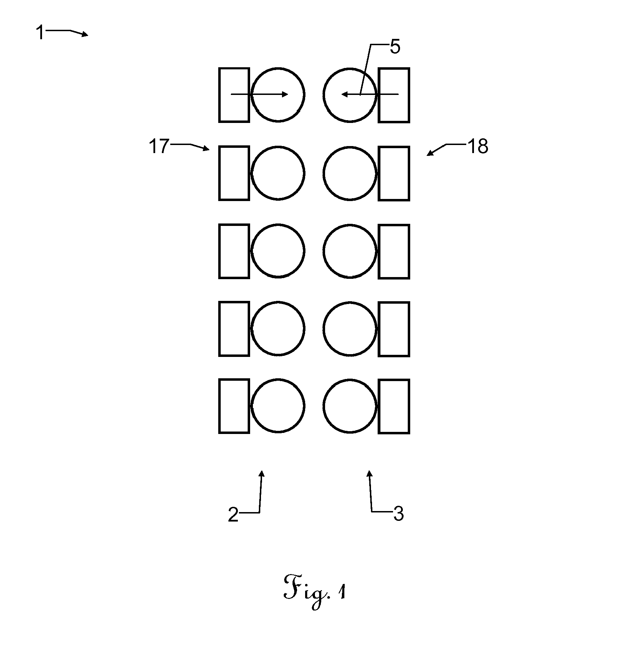

Figur 1 zeigt eine erfindungsgemässe ebene Antennenanordnung 1 für das Radar-Messgerät. Die Antennenanordnung 1 besteht dabei aus zwei linearen Untergruppen 2,3 von jeweils fünf Sende- bzw. Empfangsantennen 17,18, die beispielsweise derart auf einer oder mehreren Leiterplatten angeordnet sind, sodass sich die Antennenanordnung 1 zum möglichst direkt bzw. dichten Anlegen an eine Aussenfläche des zu untersuchenden Materials eignet.

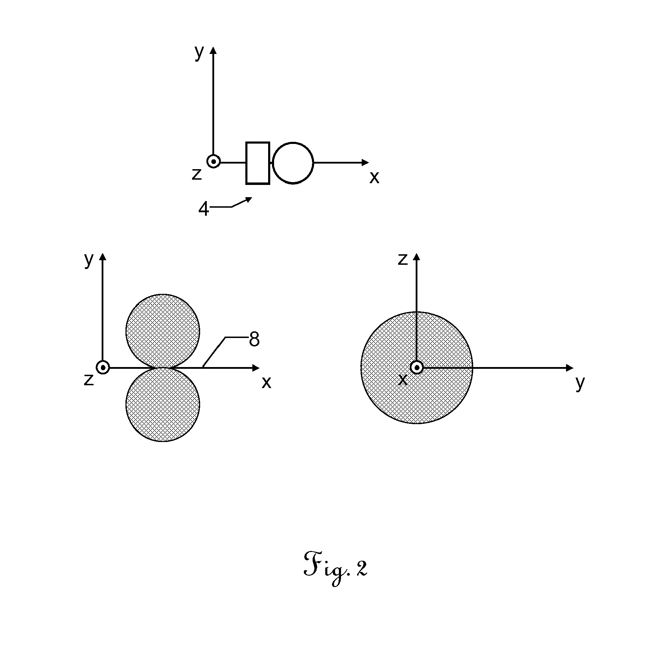

Zur Abstrahlungsoptimierung der Antennenanordnung 1 sind die einzelnen Antennen 17,18 innerhalb der Antennenuntergruppen 2,3 linear nebeneinander im Wesentlichen senkrecht zu ihrer Polarisationsrichtung 5 versetzt angeordnet. Beispielsweise sind die Antennen 17 der linksseitigen ersten Antennenuntergruppe 2 zum Senden der Signalimpulse und die Antennen 18 der rechtsseitigen, zweiten Antennenuntergruppe 3 zum Empfang der Signalimpulse ausgebildet. Dabei sind Antennen 17 der ersten Antennenuntergruppe 2 derart im Wesentlichen in Polarisationsrichtung 5 jeweils gegenüber Antennen 18 der zweiten Antennenuntergruppe 3 angeordnet, sodass sich gegenüberliegende Antennen jeweils in deren Fernfeldminima bezüglich der Abstrahlcharakteristik positioniert sind. Der untere Teil von Figur 2 zeigt dazu vereinfacht und rein schemenhaft eine Abstrahlcharakteristik eines hertzschen Dipols, der z.B. durch eine planare Antenne 4 - die im oberen Teil von Figur 2 dargestellt ist und den Antennen 17,18 aus Figur 1 entspricht - erzeugt wird. Wie in Figur 2 ersichtlich ist, weist die planare Antenne 4 dabei in Richtung der x-Achse ein Abstrahlungs-Minimum 8 auf. Erfindungsgemäss sind die Antennen 4,17,18 der Antennenanordnung 1 daher jeweils im Wesentlichen in dieser Richtung sich gegenüberliegend angeordnet, sodass ein direktes Übersprechen des Signals auf die jeweils nächstliegende Antenne vermindert werden kann.

Insbesondere weisen die Sende-Antennen 17 der ersten Untergruppe 2 aus Figur 1 jeweils gleichartige Sendeschaltungen zur Erzeugung der auszusendenden Signalimpulse und die Empfangs-Antennen 18 jeweils gleichartige Empfangsschaltungen zur Detektion von Teilen von reflektierten Signalimpulsen auf, sodass jeder einzelnen Antenne jeweils separat eine Sende- bzw. Empfangsschaltung zugeordnet ist.

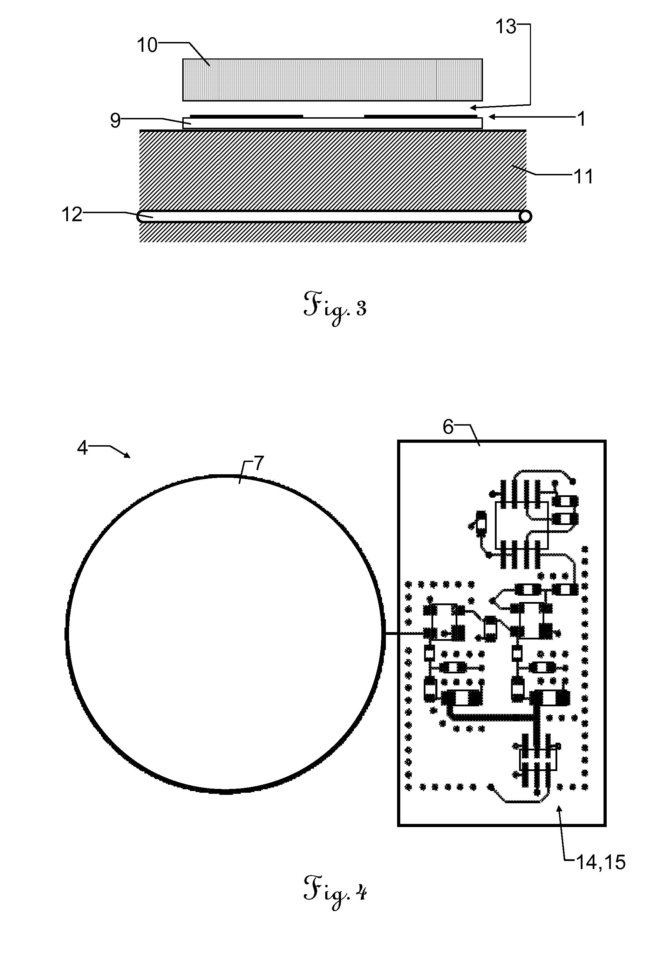

Eine einzelne Antenne aus einer der beiden linearen Untergruppen nach Figur 1 ist in Figur 4 dargestellt. Die asymmetrische dipolartige Struktur - mit zwei unterschiedlich geformten Dipol-Armen 6,7 - beinhaltet rechtsseitig die zur Erzeugung des abzustrahlenden Signals oder zu dessen Detektion erforderlichen Schaltkreise als Sende- bzw. Empfangsschaltung 14,15, wodurch die mit der rechtsseitigen Teilfläche des Dipols verbundenen Leitungen lediglich relativ langsame Hilfssignale und Versorgungsspannungen führen. Eine Ausbreitung von Mantelwellen ist somit mittels üblicher frequenzselektiver Baugruppen leicht vermeidbar.

Die Schnittdarstellung aus Figur 3 zeigt die Antennenanordnung 1 beim Gebrauch des Radar-Messgeräts, wobei diese zwischen dem zu untersuchenden Medium 11 und einer hochfrequenzabsorbierenden Materialschicht 10 eingebettet ist. Das durch eine Zone freien Raums 13 von den Antennen-Arrays getrennte absorbierende Material 10 ist - ausser wegen dessen entkoppelnder Wirkung - vorteilhaft, um sowohl Eigenresonanzen der einzelnen Antennen zu bedämpfen als auch irreführende Reflexionen leitfähiger Strukturen und Komponenten der die Antennenanordnung 1 beinhaltenden Radar-Messvorrichtung zu unterdrücken. Die Antennenuntergruppen liegen insbesondere direkt oder möglichst dicht auf der zu untersuchenden Struktur 11 - d.h. möglichst im Bereich des reaktiven Nahfeldes - auf, da bei gegebenem Antennenstrom in dem zu untersuchenden Medium 11 eine um die Wurzel aus der relativen Permittivität erhöhte Leistungsdichte erzielt wird. Hingegen würde eine im freien Raum abgesetzte Antenne zusätzlich Reflexionsverluste an der Grenzfläche zwischen freiem Raum und dem zu untersuchenden Medium 11 bewirken.

Im zu untersuchenden Medium 11 ist eine in Polarisationsrichtung verlaufende Leitung 12 eingeschlossen, deren Position und Einbettungstiefe anhand der erfindungsgemässen Radar-Messvorrichtung bestimmt und angezeigt werden kann. Insbesondere ist dabei kein händisches Überfahren einer zu detektierenden Fläche mit der Messvorrichtung durch einen Benutzer erforderlich.

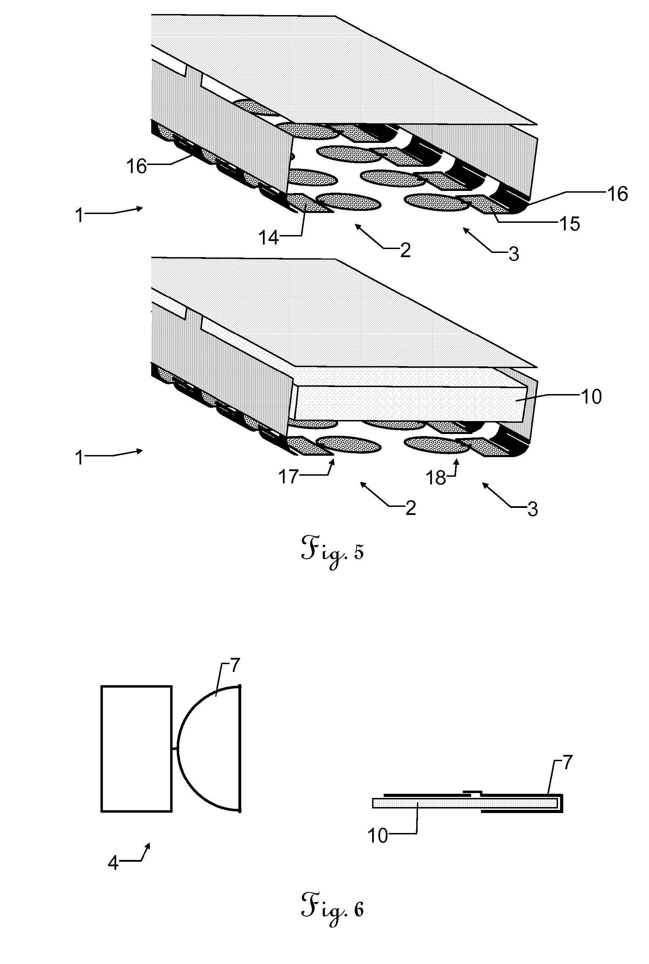

Figur 5 zeigt eine dreidimensionale Ansicht der Antennenanordnung 1 sowie deren flächenhaften Zuleitungen 16, im oberen Teil von Figur 5 ohne hochfrequenzabsorbierende Materialschicht 10 und in der unteren Teil-Darstellung mit dazwischen gefügter absorbierender Materialschicht 10. Da auf jeder einzelnen Antenne 17,18 jeweils separat eine Sende- bzw. Empfangsschaltung 14,15 aufgebracht ist, können die mit den Leiterflächen der Antennen verbundenen Leitungen 16 verhältnismässig niederfrequente Hilfssignale und niedrige Versorgungsspannungen führen. Die Ausbreitung von Mantelwellen kann somit verbessert vermieden werden. Dabei zeigt Figur 5 die erfindungswesentlichen flächenhaften Leiter einer mit den Antennenarrays ausgerüsteten handhaltbaren Radar-Messvorrichtung. Wie im unteren Teil von Figur 5 dargestellt, ist vorteilhaft das von den flächenhaften Leitern umfasste Volumen zu einem Grossteil mit hochfrequenzabsorbierendem Material 10 gefüllt. Die Spannungsversorgung der auf den einzelnen Antennen 17,18 angebrachten Schaltkreise 14,15 sowie die notwendige Hilfssignale werden über zylindrisch gewölbte mäandrierend ausgeführte Zuleitungen 16 zugeführt. Die mäandrierende Form der Zuleitung 16 wird durch die relativ niedrige Bandbreite der Hilfssignale ermöglicht und dient der Optimierung der Abstrahlung des einzelnen Antennenelementes bei tieferen Frequenzen, ebenso wie die an den Zuleitungen 16 angebrachten Stichleitungen.

Eine weitere Reduktion eines direkten Signal-Übersprechens kann dadurch erzielt werden, dass die geometrische Ausdehnung des in Richtung der nächstgelegenen Antenne der jeweils anderen Antennenuntergruppe zielenden Dipolarms 7 der einzelnen Antennen unter Beibehaltung der unteren Grenzfrequenz reduziert wird. Figur 6 zeigt linksseitig die Aufsicht und rechtsseitig den Querschnitt einer grössenreduzierten planaren Antenne 4, wobei der rechte Dipolarm 7 dazu - insbesondere um eine zum einfachen Anordnen der Antenne verwendetet Leiterplatte 10 - gefaltet ist.

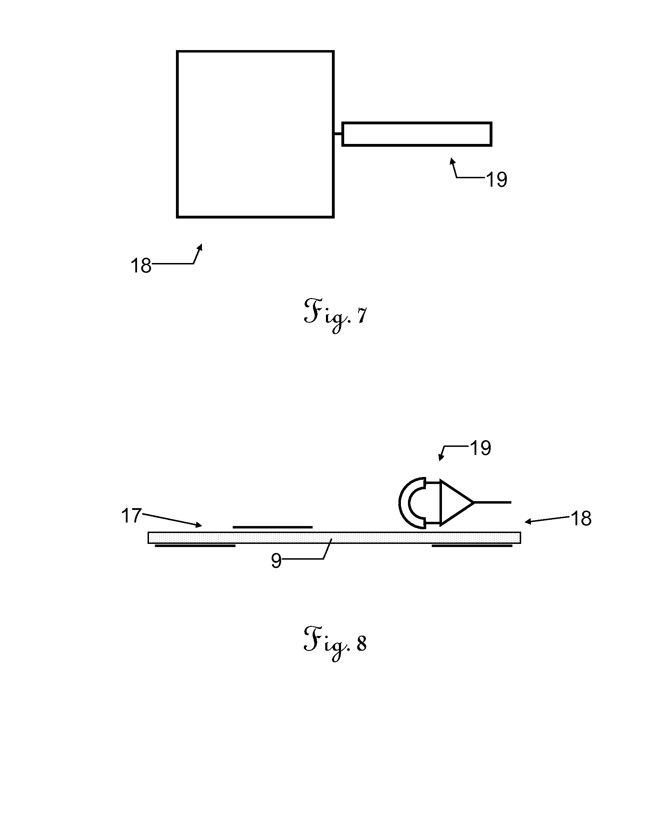

Figur 7 zeigt eine Aufsicht eine spezielle Ausführungsform für eine Empfangs-Antenne 18 der zweiten Untergruppe, durch die eine starke Reduktion des direkten Übersprechens zwischen jeweils nächstliegenden bzw. gegenüberliegenden Antennen der ersten und zweiten Untergruppe realisierbar ist. Die Antenne 18 weist eine elektrisch geschirmte, im Nutzfrequenzbereich nicht resonante Leiterschleife 19 am Eingang eines Vorverstärkers auf, wie auch in der Querschnittsdarstellung in Figur 8 rechtsseitig ersichtlich ist. Figur 8 zeigt dabei in Querschnittsdarstellung eine Kombination aus einer planaren Antenne - beispielsweise aus Figur 4 - als Sende-Antenne 17 der ersten Untergruppe mit der elektrisch geschirmten Empfangs-Antenne 18 aus Figur 7. Da als einzige Feldkomponente das radiale elektrische Nahfeld der planaren Antenne 17 auf die gegenüberliegende Antenne 18 direkt einwirken kann, diese sich aber in einem Minimum sowohl des magnetischen Nah- als auch des Fernfeldes befindet, kann eine weitgehende Unterdrückung eines direkt übersprechenden Signals erreicht werden.

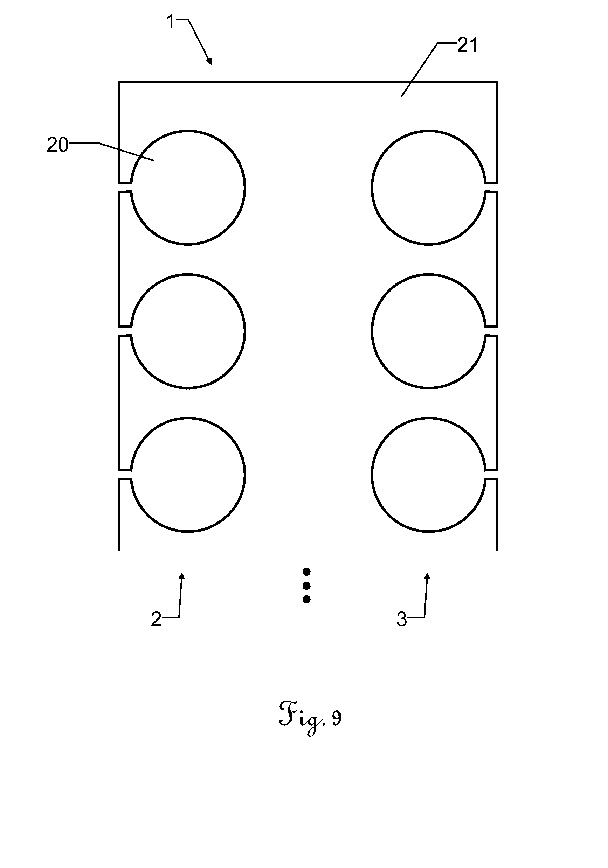

Als alternative Ausführungsform ist in Figur 9 eine aus Schlitzantennen 20 konfigurierte planare Antennenanordnung 1 mir zwei Untergruppen 2,3 dargestellt. Die Schlitzantennen 20 sind dabei jeweils als Aussparungen aus einem flächenhaften Leiter 21 ausgebildet, wobei erfindungsgemäss die Antennen der ersten - beispielsweise in Figur 9 linksseitigen - Untergruppe 2 im Wesentlichen im Fernfeldminimum den jeweiligen Antennen der zweiten - in Figur 9 rechtsseitigen - Untergruppe 3 gegenüberliegend platziert sind. Vorteilhaft ist in diesem Fall die unproblematische Platzierung aller erforderlichen Schaltkreise auf dem die Antennen umgebenden flächenhaften Leiter 21 z.B. in bekannter Microstrip-Technologie.

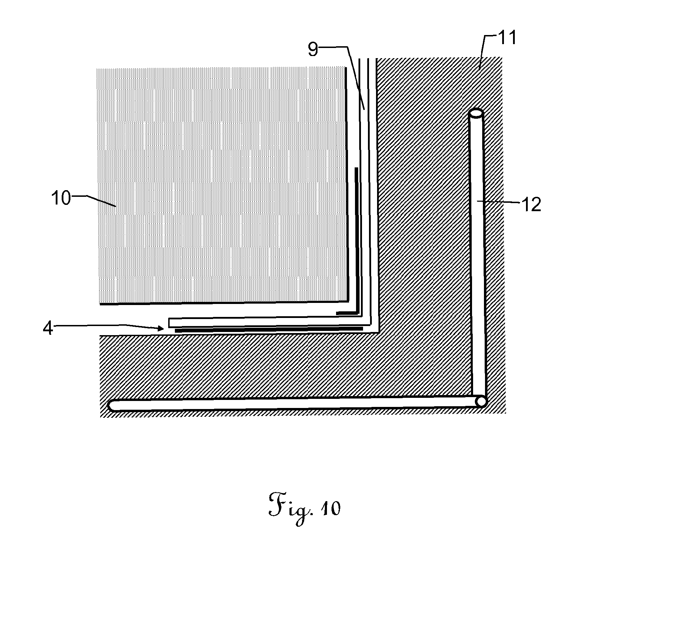

In Figur 10 ist eine Ausführungsform einer einzelnen Antenne 4 von einer Untergruppe dargestellt, die ein Anlegen des Antennenarrays an ein sich über eine rechtwinklige Kante erstreckendes zu untersuchendes Medium 11 gestattet. Einer der beiden Dipolarme der Antenne 4 ist in dieser Ausführungsform auf einem rechtwinklig zum Gegenpart angefügten PC-Board 9 angebracht, welches nach oben fortgeführt ist und in dieser Richtung eine zweite Untergruppe von planaren Antennen tragen kann.

Die Schnittdarstellung aus Figur 10 zeigt dabei die gewinkelte Antennenanordnung beim Gebrauch des Radar-Messgeräts, wobei diese zwischen einer Ecke des zu untersuchenden Mediums 11 und - mit geringfügigem Abstand - einer hochfrequenzabsorbierenden Materialschicht 10 eingebettet ist.

Durch die gewinkelte Ausführung der Antennenanordnung kann die Radar-Messvorrichtung auch direkt oder möglichst dicht an z.B. gewinkelte Wände einer Zimmerecke - d.h. möglichst im Bereich des reaktiven Nahfeldes - angelegt werden, um bei gegebenem Antennenstrom in dem zu untersuchenden Medium 11 eine erhöhte Leistungsdichte zu erzielen. Hingegen würde eine im freien Raum abgesetzte Antenne zusätzlich Reflexionsverluste an der Grenzfläche zwischen freiem Raum und dem zu untersuchenden Medium 11 bewirken.

Im zu untersuchenden Medium 11 ist eine über einen rechten Winkel verlegte, in Polarisationsrichtung der Antennen 4 verlaufende Leitung 12 eingeschlossen, deren Position und Einbettungstiefe anhand der erfindungsgemässen Radar-Messvorrichtung bestimmt und angezeigt werden kann.

Es versteht sich, dass diese dargestellten Figuren nur mögliche Ausführungsbeispiele schematisch darstellen. Die verschiedenen Ansätze können erfindungsgemäss miteinander sowie mit Verfahren bzw. Radarmess-Vorrichtungen des Stands der Technik kombiniert werden.

## Patentansprüche

1. Radar-Messvorrichtung zur Ortung eines in einem zu untersuchenden Medium (11) eingeschlossenen Objekts (12) mittels elektromagnetischer hochfrequenter Signalimpulse, mit
• einer Auswerteeinheit (24) mit einem Rechenmittel,
• einer Antennenanordnung (1) in einer ersten Ebene aus mehreren planaren Antennen (4,17,18), wobei die Antennen (4,17,18) zum Empfang und/oder zur Aussendung der Signalimpulse ausgebildet sind, und
• Sendeschaltungen (14) zur Erzeugung der auszusendenden Signalimpulse und Empfangsschaltungen (15) zur Detektion von am Objekt (12) reflektierten Teilen der Signalimpulse,
**dadurch gekennzeichnet, dass**
die Antennenanordnung (1) mindestens eine erste und eine zweite Antennenuntergruppe (2,3) aufweist, wobei
• innerhalb der ersten und der zweiten Antennenuntergruppen (2,3) die Antennen (4,17,18) jeweils linear nebeneinander angeordnet sind, und
• mindestens ein Teil der Antennen (4,17,18) der ersten und der zweiten Antennenuntergruppe (2,3) sich jeweils in Richtung ihres - durch die Abstrahlcharakteristik gegebenen - Fernfeldminimums (8) gegenüberliegend angeordnet sind.

2. Radar-Messvorrichtung nach Anspruch 1,
**dadurch gekennzeichnet, dass**
• die Antennen der Antennenanordnung (1) jeweils einem ersten und einem zweiten Dipol-Arm (6,7) aufweisen mit durch eine Anordnungsrichtung der Dipol-Arme (6,7) hervorgehender Polarisationsrichtung (5), und
• die Antennen (4) der Antennenanordnung (1) mit parallel ausgerichteter Polarisationsrichtung (5) angeordnet sind.

3. Radar-Messvorrichtung nach Anspruch 1 oder 2,
**dadurch gekennzeichnet, dass**
an der vom Medium (11) abgewandten Seite der Antennenanordnung (1) eine hochfrequenz-absorbierende Materialschicht (10) in einer - insbesondere zur ersten Ebene parallel ausgerichteten - zweiten Ebene angeordnet ist, sodass ein durch elektrisches Nahfeld bedingtes Signal-Übersprechen von sich jeweils gegenüberliegenden Antennen (4,17,18) der ersten und zweiten Antennenuntergruppe (2,3) reduziert und Eigenresonanzen der einzelnen Antennen (4,17,18) bedämpft werden.

4. Radar-Messvorrichtung nach Anspruch 3,
**dadurch gekennzeichnet, dass**
die hochfrequenz-absorbierende Materialschicht (10) durch eine Zone freien Raumes (13) von der Antennenanordnung (1) getrennt ist, insbesondere wobei die hochfrequenz-absorbierende Materialschicht (10) etwa 1 - 5 mm von der Antennenanordnung (1) beabstandet ist.

5. Radar-Messvorrichtung nach einem der vorangehenden Ansprüche,
**dadurch gekennzeichnet, dass**
die Antennen der ersten Antennenuntergruppe (2) als Sende-Antennen (17) und die Antennen der zweiten Antennenuntergruppe (3) als Empfangs-Antennen (18) ausgebildet sind,
• insbesondere wobei den Sende-Antennen (17) jeweils eine der Sendeschaltungen (14) und den Empfangs-Antennen (18) jeweils eine der Empfangsschaltungen (15) zugeordnet sind,
• im Speziellen wobei die Sende- bzw. Empfangsschaltungen (14,15) jeweils auf einem der beiden Dipol-Arme (6,7) der einzelnen Antennen aufgebracht sind.

6. Radar-Messvorrichtung nach einem der vorangehenden Ansprüche,
**dadurch gekennzeichnet, dass**
die einzelnen Antennen (4,17,18) eine asymmetrische Geometrie aufweisen, insbesondere wobei der erste Dipol-Arm (6) der einzelnen Antennen (4,17,18) rechteckig und der zweite Dipol-Arm (7) kreisförmig ausgebildet ist.

7. Radar-Messvorrichtung nach einem der vorangehenden Ansprüche,
**dadurch gekennzeichnet, dass**
der erste und der zweite Dipol-Arm (6,7) als leitende Platten ausgebildet sind, wobei im Speziellen einer der beiden Dipol-Arme (6,7) gefaltet ist.

8. Radar-Messvorrichtung nach einem der Ansprüche 1 bis 6,
**dadurch gekennzeichnet, dass**
die Antennen jeweils als Schlitzantennen (20) mit einem die Antennen umgebenden flächenhaften Leiter (21) ausgebildet sind, insbesondere wobei die Sende- und Empfangsschaltung (14,15) für die jeweiligen Antennen auf dem die Antennen umgebenden flächenhaften Leiter (21) aufgebracht sind.

9. Radar-Messvorrichtung nach einem der vorangehenden Ansprüche,
**dadurch gekennzeichnet, dass**
die Antennen (4,17,18) der Antennenanordnung (1) auf einer oder mehreren Leiterplatten (9) aufgebracht oder in hochpermittivem Material, insbesondere Titandioxid, eingebettet sind.

10. Radar-Messvorrichtung nach einem der vorangehenden Ansprüche,
**dadurch gekennzeichnet, dass**
• die erste Antennenuntergruppe (2) mindestens drei linear in gleichem Abstand nebeneinander angeordnete Antennen (17) mit jeweils einer Sendeschaltung (14) und
• die zweite Antennenuntergruppe (3) mindestens drei in gleichem Abstand nebeneinander angeordnete Antennen (18) mit jeweils einer Empfangsschaltung (15)
aufweist, wobei sich jeweils die Antennen (17,18) der ersten und der zweite Antennenuntergruppe (2,3) in ihrer Polarisationsrichtung (5) gegenüberliegen.

11. Radar-Messvorrichtung nach einem der vorangehenden Ansprüche,
**dadurch gekennzeichnet, dass**
Steuermittel vorhanden sind, sodass mit den zur Aussendung ausgebildeten Antennen (17) abwechselnd jeweils nacheinander mit definiertem zeitlichem Versatz Signalimpulse aussendbar sind.

12. Radar-Messvorrichtung nach einem der vorangehenden Ansprüche,
**dadurch gekennzeichnet, dass**
die zum Empfang vorgesehenen Antennen (18) als elektrisch geschirmte Antennen, insbesondere mit einer im Frequenzbereich der Signalimpulse nicht resonanten Leiterschleife (19) am Eingang eines Vorverstärkers, ausgebildet sind.

13. Radar-Messverfahren zum Orten eines in einem zu untersuchenden Medium (11) eingeschlossenen Objekts (12) mittels breitbandiger elektromagnetischer hochfrequenter Signalimpulsen im Bereich zwischen 0,5 und 10 GHz mit einer Antennenanordnung (1) in einer ersten Ebene aus mindestens einem ersten und einem zweiten Antennenarray (2,3) mit jeweils mehreren planaren Antennen (4,17,18) mit paralleler Polarisationsrichtung (5), wobei sich die Antennen (17) des ersten Antennenarrays (2) und die Antennen (18) des zweiten Antennenarrays (3) im Wesentlichen paarweise jeweils - insbesondere in deren Polarisationsrichtung (5) - gegenüberliegen,
mit den Schritten
• Aussenden von in gleicher Richtung polarisierten Messsignalen durch die Antennen (17) des ersten Antennenarrays (2) jeweils abwechselnd und sequenziell nacheinander durch jeweils einzelne der Antennen (17),
• Empfangen von jeweils mindestens einem Teil von am Objekt (12) reflektierten Signalimpulsen durch mindestens eine der Antennen (18) des zweiten Antennenarrays (3),
• Bestimmen der jeweiligen Laufzeiten der Signalimpulse von der jeweils aussendenden Antenne (17) des ersten Antennenarrays (2) zu der mindestens einen jeweils empfangenden Antenne (18) des zweiten Antennenarrays (3) und
• Akkumulieren der einzelnen Laufzeiten zu einem Messergebnis bezüglich der Ortung des Objekts.

14. Radar-Messverfahren nach Anspruch 13,
**dadurch gekennzeichnet, dass**
aus dem Messergebnis eine Einbettungstiefe und/oder eine Position des Objekts (12) berechnet wird, im Speziellen wobei daraus ein Ergebnisbild mit der Einbettungstiefe und/oder der Position des Objekts (12) erzeugt und grafisch bereitgestellt wird.
